# EUROPÄISCHE PATENTANMELDUNG

(11) **EP 4 002 835 A1**
(43) Veröffentlichungstag der Anmeldung: **25.05.2022**
(21) Anmeldenummer: 21201991.3
(22) Anmeldetag: 11.10.2021
(51) Int. Cl.: H04N 7/01, B60R 1/00

(54) **INDIREKTES SICHTSYSTEM UND VERFAHREN ZUM ANPASSEN EINER BILDWIEDERHOLUNGSRATE**

(30) Priorität: 12.11.2020 DE 102020129908
(71) Anmelder: MEKRA Lang GmbH & Co. KG, 91465 Ergersheim (DE)
(72) Erfinder: Lang, Dr., Werner, 91465 Ergersheim (DE); Geißendörfer, Peter, 91722 Arberg (DE); Redlingshöfer, Andreas, 90619 Trautskirchen (DE)
(74) Vertreter: Kramer Barske Schmidtchen Patentanwälte PartG mbB

(57) **Zusammenfassung**

Ein indirektes Sichtsystem für ein Fahrzeug weist mindestens eine Bildaufnahmevorrichtung (2) mit einem Bildsensor (3) zum fortlaufenden Aufnehmen von Bildern mit einer ersten Bildwiederholungsrate auf, einen Bildspeicher (4), der Bilder für eine Verarbeitung, die zeitlich nach der Aufnahme der Bilder liegt, zwischenspeichert, eine Bildverarbeitungsvorrichtung (6), die angepasst ist zum fortlaufenden Berechnen von mindestens einem neuen Bild aus mindestens zwei aufeinanderfolgend aufgenommenen Bildern, wobei die neu berechneten Bilder eine zweite Bildwiederholungsrate aufweisen, die von der ersten Bildwiederholungsrate verschieden ist; und eine Bildausgabevorrichtung (5) zum Ausgeben der fortlaufend neu berechneten Bilder mit der zweiten Bildwiederholungsrate.

## Beschreibung

Die vorliegende Erfindung betrifft ein indirektes Sichtsystem, das insbesondere als Spiegelersatzsystem nach UN/ECE-R46 für ein Fahrzeug verwendet werden kann, sowie ein Verfahren zum Anpassen einer Bildwiederholungsrate von Bildern, die von einem Bildsensor einer Bildaufnahmevorrichtung des Sichtsystems aufgenommen werden.

Bei Kamerasystemen bzw. Spiegelersatzsystemen (nach UN/ECE-R46) fordern Fahrzeughersteller eine Bildwiederholungsrate von 60 Herz bzw. Bilder pro Sekunde (frames per second/fps). Die in Monitoren verbauten LCD-Panels sind bereits standardmäßig mit mehr als 60 fps verfügbar. Ein Problem besteht jedoch darin, dass in der in dem Spiegelersatzsystem verwendeten Kamera standardmäßig verfügbare Bildsensoren verbaut sind, die ihre volle Auflösung bei gleichzeitig vollem Dynamikumfang nur mit weniger als 60 fps ausgeben können. Um die gesetzlichen Anforderungen für ein Spiegelersatzsystem nach UN/ECE-R46 einzuhalten, ist jedoch bei hoher Auflösung gleichzeitig ein höherer Dynamikumfang erforderlich.

Bei der Verwendung von einem LCD-Panel mit standardmäßig beispielsweise 60 fps und bei gleichzeitiger Verwendung eines standardmäßig verfügbaren Bildsensors, die wie oben beschrieben bezüglich ihrer Bildwiederholungsrate nicht übereinstimmen, ergibt sich also das Problem, dass diese beide Komponenten ohne weiter technische Maßnahmen nicht miteinander betrieben werden können.

Gemäß dem Stand der Technik wird obiges Problem dadurch gelöst, dass spezielle, hochpreisige Bildsensoren verwendet werden, die eine hohe Auflösung bei gleichzeitig vollem Dynamikumfang und einer Bildwiederholungsrate von beispielsweise 60 fps ermöglichen.

Alternativ wird gemäß dem Stand der Technik ein standardmäßig verfügbarer Bildsensor mit einer Bildwiederholungsrate von weniger als 60fps verwendet und die Bildwiederholungsrate von beispielsweise 30 fps auf 60 fps rechnerisch durch eine Verarbeitungseinheit des Kamerasystems erhöht, indem jedes Bild zweimal hintereinander auf dem Monitor ausgegeben wird. Eine rechnerische Erhöhung der Bildwiederholungsrate von beispielsweise 40 fps auf 60 fps kann gemäß dem Stand der Technik dadurch erfolgen, dass jedes zweite Bild zweimal hintereinander auf dem Monitor ausgegeben wird.

Ein Nachteil obiger bekannter Techniken zum Anpassen einer Bildwiederholungsrate des Bildsensors an die Bildwiederholungsrate des LCD-Panels liegt darin, dass der Bildeindruck für den Fahrer dem eines 30 fps- bzw. 40 fps-Kamerasystems entspricht, und dadurch weniger "flüssig" bzw. "stockend" wirkt, wodurch hohe Relativgeschwindigkeiten zwischen dem eigenen Fahrzeug und weiteren Verkehrsteilnehmern schlechter eingeschätzt werden können. Die Relativgeschwindigkeiten sind gerade für Spiegelersatzsysteme nach UN/ECE-R46 der Gruppen I-IV jedoch niedriger als für Spiegelersatzsysteme der Gruppen V und VI, Rückfahrkameras oder Surround-View-(Bird-View)-Systeme, aufgrund der Bildperspektive der Darstellung des Bildinhalts bei der Verwendung der Systeme.

Aufgabe der Erfindung ist es, ein Kamerasystem für ein Fahrzeug sowie ein Verfahren bereitzustellen, welche die Bildwiederholungsrate eines Bildsensors an die Bildwiederholungsrate eines Anzeigepanels (LCD-Panel, OLED-Panel, LED-Panel, etc.) anpassen und gleichzeitig dem Fahrer den Eindruck einer flüssigen, nicht stockenden Bildabfolge vermitteln.

Die oben genannte Aufgabe wird durch ein indirektes Sichtsystem für ein Fahrzeug mit den Merkmalen des Anspruchs 1 sowie durch ein Verfahren gemäß den Merkmalen des Anspruchs 11 gelöst. Bevorzugte Ausführungsformen sind in den abhängigen Ansprüchen angegeben.

Das indirekte Sichtsystem für ein Fahrzeug gemäß der Erfindung weist mindestens eine Bildaufnahmevorrichtung mit einem Bildsensor auf zum fortlaufenden Aufnehmen von Bildern mit einer ersten Bildwiederholungsrate, die der Bildwiederholungsrate des Bildsensors entspricht. Standardmäßig verfügbare Bildsensoren, die im automotive Bereich verwendet werden, haben üblicherweise eine Bildwiederholungsrate von weniger als 60 fps. Durch diese niedrige Bildwiederholungsrate müssen weniger Daten innerhalb des Systems übertragen werden, wodurch kostengünstigere Komponenten eingesetzt werden können.

Gemäß der Erfindung werden die von der Bildaufnahmevorrichtung aufgenommenen Bilder in einem Bildspeicher zwischengespeichert, um die Bilder zeitlich nach der Aufnahme der Bilder weiterzuverarbeiten. Diese Weiterverarbeitung erfolgt gemäß der vorliegenden Erfindung derart, dass die Bildwiederholungsrate des Bildsensors auf eine gewünschte, in diesem Fall vom Fahrzeughersteller vorgeschriebene Bildwiederholungsrate von 60 fps angepasst wird, um trotz der niedrigen Bildwiederholungsrate des Bildsensors für das menschliche Auge einen flüssigen Bewegungsablauf auf einer Bildausgabevorrichtung mit einer Bildwiederholungsrate von 60 fps darstellen zu können.

Die Verarbeitung der in dem Bildspeicher zwischengespeicherten Bilder erfolgt gemäß der Erfindung durch eine Bildverarbeitungsvorrichtung, die fortlaufend mindestens ein neues Bild aus mindestens zwei aufeinanderfolgend aufgenommenen Bildern berechnet. Als Folge der Berechnung weisen die neu berechneten Bilder eine zweite Bildwiederholungsrate auf, die höher als die erste Bildwiederholungsrate ist, mit der die Bilder aufgenommen worden sind. Beispielsweise ist die erste Bildwiederholungsrate bei 40 fps, und die zweite Bildwiederholungsrate ist bei 60 fps. Gemäß der Erfindung kann jedoch jede x-beliebige Bildwiederholungsrate auf eine x-beliebige höhere oder auch niedrigere Bildwiederholungsrate angepasst werden. Dadurch ist es möglich, mehr unterschiedliche Bildsensoren mit unterschiedlichen LCD-Panels zu kombinieren, wodurch sich die Zahl von technischen Lösungen erhöht und Kostenvorteile entstehen.

Gemäß der vorliegenden Erfindung weist das indirekte Sichtsystem schließlich eine Bildausgabevorrichtung auf, die in der Lage ist, Bilder mit der zweiten hohen Bildwiederholungsrate (60 fps) auszugeben. Speziell gibt die Bildausgabevorrichtung die von der Bildverarbeitungsvorrichtung fortlaufend neu berechneten Bilder mit der angepassten Bildwiederholungsrate des Bildsensors aus.

Das fortlaufende Berechnen von neuen Bildern in der Bildverarbeitungsvorrichtung, wie oben beschrieben, erfolgt speziell dadurch, dass zwei aufeinanderfolgende, jeweils mit einem prozentualen Faktor multiplizierte Bilder summiert werden, um ein neu berechnetes Bild zu erzeugen. Dabei entspricht der prozentuale Faktor einer zeitlichen Lage des neu berechneten Bilds in Bezug auf die zeitliche Lage der zugrunde liegenden mindestens zwei aufeinanderfolgend aufgenommenen Bilder.

Die oben genannten prozentualen Faktoren hängen gemäß der Erfindung insbesondere von der Bildwiederholungsrate der Bildaufnahmevorrichtung bzw. des Bildsensors und der Bildwiederholungsrate der Bildausgabevorrichtung ab. Diese prozentuellen Faktoren können vorab festgelegt und in einem Speicher abgespeichert oder von der Bildverarbeitungsvorrichtung zur Laufzeit des Systems berechnet werden.

Gemäß der vorliegenden Erfindung werden bei der Erzeugung eines neuen Bilds speziell Helligkeitsinformation und/oder Farbinformation jedes Pixels in einem aufgenommenen Bild mit einem entsprechenden prozentualen Faktor multipliziert, und zur Erzeugung des neuen Bilds werden jeweils sich lokal entsprechende Pixel in den mindestens zwei aufeinanderfolgend aufgenommenen Bildern summiert. Im Gegensatz zu dem allgemeinen bekannten Framerateninterpolieren wird also keine Abfolge aufeinanderfolgender Bilder analysiert und versucht, darin identische oder zusammengehörige Bildteile auszumachen, um hieraus Bewegungsvektoren zu ermitteln, mit deren Hilfe dann die Position eines Objekts zum gewünschten Zeitpunkt zwischen zwei aufeinanderfolgenden Bildern rekonstruiert werden kann. Durch das Verwenden von nur der Helligkeitsinformation und/oder nur der Farbinformation ohne Berücksichtigung von Bewegungsvektoren wird insbesondere der Rechenaufwand zur Erzeugung eines neuen Bilds verringert. Dabei wird das Erzeugen von sogenannten "Geisterbildern" in Kauf genommen, da diese den Eindruck eines flüssigen Bewegungsablaufs für das menschliche Auge nicht beeinträchtigen.

Alternativ kann gemäß der vorliegenden Erfindung bei der Berechnung eines neuen Bilds nicht die Helligkeitsinformation und/oder Farbinformation jedes Pixels von aufgenommenen Bildern verwendet werden, sondern die Helligkeitsinformation und/oder Farbinformation der Rohdaten des Bildsensors selbst.

Wie oben erwähnt, werden zur Erzeugung eines neuen Bilds mindestens zwei aufeinanderfolgend aufgenommene Bilder mit einem entsprechenden prozentualen Faktor multipliziert und die resultierenden Bilder summiert. Dabei entspricht der prozentuale Faktor der zeitlichen Lage des neu berechneten Bilds in Bezug auf die zeitliche Lage der mindestens zwei aufeinanderfolgend aufgenommenen Bilder. Die prozentualen Faktoren können vorzugsweise gemäß der Erfindung als Konstanten in der Bildverarbeitungsvorrichtung gespeichert sein. Insbesondere kann ein Raster für die Faktorermittlung (Ermittlung der prozentualen Faktoren) in einem Speicher gespeichert, wobei das Raster für die Faktorermittlung von der Bildwiederholungsrate der Bildaufnahmevorrichtung und der Bildwiederholungsrate der Bildausgabevorrichtung abhängt, also von einer (ersten) Bildwiederholungsrate des Bildsensors, die an die (zweite) Bildwiederholungsrate der Bildausgabevorrichtung angepasst werden soll.

Gemäß der vorliegenden Erfindung kann das oben genannte vorgegebene Raster zur Faktorermittlung einen sogenannten Anfangs-Phasenversatz zwischen der ersten und der zweiten Bildwiederholungsrate aufweisen, so dass die prozentualen Faktoren nicht nur von der Bildwiederholungsrate der Bildaufnahmevorrichtung und der Bildwiederholungsrate der Bildausgabevorrichtung abhängen, sondern auch von diesem Anfangs-Phasenversatz zwischen der ersten und zweiten Bildwiederholungsrate. Durch das zusätzliche Verwenden des Anfangs-Phasenversatzes können möglichst viele neue Bilder berechnet werden, von denen möglichst wenige mit ursprünglich aufgenommenen Bildern übereinstimmen.

Gemäß der vorliegenden Erfindung kann beispielsweise die Summe der prozentualen Faktoren, mit denen zwei aufeinanderfolgende Bilder multipliziert werden, gleich 100 % sein. Ist die Summe größer als 100 %, erfolgt eine Bildaufhellung, wenn die Summe kleiner als 100 % ist, erfolgt dagegen eine Bildabdunkelung in dem aus diesen zwei aufeinanderfolgenden Bildern erzeugten neuen Bild.

Gemäß der vorliegenden Erfindung ist die Bildwiederholungsrate der Bildaufnahmevorrichtung geringer als die Bildwiederholungsrate der Bildausgabevorrichtung, wobei beide Bildwiederholungsraten statisch sein können, so dass sie sich während des Betriebs des Systems nicht ändern. Alternativ ist es möglich, dass die Bildwiederholungsrate der Bildaufnahmevorrichtung sich dynamisch ändert in Abhängigkeit von Fahrzeugzuständen, beispielsweise Geschwindigkeit, Vor- und Rückwärtsfahrt, Stillstand, Parkvorgang, Rangiervorgang, Abbiegevorgang, etc., in Abhängigkeit von Fahrzeugsignalen, beispielsweise Blinker, Rückwärtsgang, Helligkeitssensoren, Beschleunigungssensoren, etc., in Abhängigkeit einer manuellen Eingabe durch einen Benutzer, beispielsweise Drücken eines Knopfs, etc., und/oder in Abhängigkeit von Signalen aus dem indirekten Sichtsystem selbst, beispielsweise eine durch die Bildaufnahmevorrichtung über den Bildsensor erfasste Helligkeit, durch einen Helligkeitssensor in der Bildausgabevorrichtung, etc. Durch das dynamische Ändern der Bildwiederholungsrate, insbesondere durch eine Reduktion der Bildwiederholungsrate bei dunkler Umgebung kann die Belichtungszeit des Bildsensors verlängert werden, wodurch eine höhere Empfindlichkeit und somit eine bessere Sicht bei dunkler Umgebung erreicht werden kann.

Gemäß der vorliegenden Erfindung ist beispielsweise die Bildverarbeitungsvorrichtung in der Bildaufnahmevorrichtung oder in der Bildausgabevorrichtung integriert ausgebildet, und der Zwischenbildspeicher ist in der Bildverarbeitungsvorrichtung integriert ausgebildet.

Zu erwähnen sei auch, dass gemäß der Erfindung vom Zeitpunkt der Aufnahme des ersten, der wenigsten zwei aufeinanderfolgenden Bilder, und der Anzeige des daraus neu berechneten Bilds für den Fahrer nicht mehr als 200 ms vergehen sollten.

Bei dem Verfahren zum Anpassen einer Bildwiederholungsrate gemäß der Erfindung erfolgt ein fortlaufendes Aufnehmen von Bildern mit der Bildwiederholungsrate des Bildsensors der Bildaufnahmevorrichtung, ein Zwischenspeichern der aufgenommenen Bilder für eine zeitlich nach der Aufnahme der Bilder liegende Verarbeitung, ein fortlaufendes Berechnen von mindestens einem neuen Bild aus mindestens zwei aufeinanderfolgend aufgenommenen Bildern, wobei die neu berechneten Bilder die Bildwiederholungsrate der Bildausgabevorrichtung haben; und ein Ausgeben der fortlaufend neu berechneten Bilder mit der Bildwiederholungsrate der Bildausgabevorrichtung.

Speziell erfolgt bei dem Verfahren gemäß der Erfindung ein Berechnen des mindestens einen neuen Bilds durch Bilden einer Summe aus mindestens zwei aufeinanderfolgenden, jeweils mit einem prozentualen Faktor multiplizierten, Bildern, wobei der prozentuale Faktor der zeitlichen Lage des neu berechneten Bilds in Bezug auf die zeitliche Lage der mindestens zwei aufeinanderfolgend aufgenommenen Bilder entspricht.

Gemäß dem Verfahren der vorliegenden Erfindung erfolgt ferner ein Multiplizieren einer Helligkeitsinformation und/oder Farbinformation jedes Pixels in einem aufgenommenen Bild getrennt oder kombiniert mit einem entsprechenden prozentualen Faktor, und dann ein Summieren jeweils entsprechender Pixel in den mindestens zwei aufeinanderfolgend aufgenommenen Bildern zum Erzeugen des neuen Bilds. Alternativ kann gemäß dem Verfahren der Erfindung ein Multiplizieren einer Helligkeitsinformation und/oder Farbinformation der Rohdaten des Bildsensors getrennt oder kombiniert mit einem entsprechenden prozentualen Faktor erfolgen, und dann ein Summieren der jeweiligen Resultate in den mindestens zwei aufeinanderfolgend aufgenommenen Bildern zur Erzeugung des neuen Bilds. Die prozentualen Faktoren hängen bei dem Verfahren gemäß der Erfindung insbesondere von der Bildwiederholungsrate der Bildaufnahmevorrichtung und der Bildwiederholungsrate der Bildausgabevorrichtung ab. Ähnlich wie bei dem System gemäß der Erfindung können bei dem Verfahren gemäß der Erfindung die prozentualen Faktoren nicht nur von den Bildwiederholungsraten der Bildaufnahmevorrichtung und der Bildausgabevorrichtung abhängen, sondern zusätzlich von einem Anfangs-Phasenversatz zwischen den Bildwiederholungsraten.

Gemäß dem Verfahren der Erfindung können die prozentualen Faktoren als Konstanten in der Bildverarbeitungsvorrichtung gespeichert oder zur Laufzeit durch die Bildverarbeitungsvorrichtung berechnet werden.

Gemäß dem Verfahren der Erfindung kann die Summe der prozentualen Faktoren, mit denen mindestens zwei aufeinanderfolgende Bilder multipliziert werden, gleich 100 % sein, oder größer als 100% bei Bildaufhellung oder kleiner als 100% bei Bildabdunkelung des neu erzeugten Bild.

Bei dem Verfahren gemäß der Erfindung könne die Bildwiederholungsrate der Bildaufnahmevorrichtung und die Bildwiederholungsrate der Bildausgabevorrichtung statisch sein und sich während des Betriebs nicht ändern. Alternativ kann sich die Bildwiederholungsrate der Bildaufnahmevorrichtung in Abhängigkeit von Fahrzeugzuständen, Fahrzeugsignalen, einer manuellen Eingabe durch den Benutzer und/oder Signalen eines Helligkeitssensors der Bildaufnahmevorrichtung und/oder Signalen eines Helligkeitssensors der Bildausgabevorrichtung dynamisch ändern, ähnlich wie bei dem oben genannten System der Erfindung.

Ferner kann bei dem Verfahren gemäß der Erfindung die Bildverarbeitungsvorrichtung in der Bildaufnahmevorrichtung oder der Bildausgabevorrichtung integriert sein, und/oder der Bildspeicher kann in der Bildverarbeitungsvorrichtung integriert sein, ähnlich wie bei dem oben beschriebenen System gemäß der vorliegenden Erfindung.

### Kurzbeschreibung der Zeichnungen

Im Folgenden werden bevorzugte Ausführungsbeispiele der Erfindung unter Bezugnahme auf die beigefügten Figuren beschrieben. Gleiche Bezugszeichen bezeichnen dabei gleiche Komponenten. Es zeigen:
- Figur 1: eine schematische Ansicht eines indirekten Sichtsystems gemäß der vorliegenden Erfindung;
- Figur 2: ein schematisches Blockdiagramm zur Erklärung der Berechnung eines neuen Bilds gemäß der vorliegenden Erfindung;
- Figur 3: ein erstes Beispiel einer Bildwiederholungsratenerhöhung gemäß dem Stand der Technik;
- Figur 4: ein erstes Ausführungsbeispiel einer Bildwiederholungsratenerhöhung gemäß der Erfindung;
- Figur 5: ein zweites Ausführungsbeispiel einer Bildwiederholungsratenerhöhung gemäß der Erfindung;
- Figur 6: ein zweites Beispiel einer Bildwiederholungsratenerhöhung gemäß dem Stand der Technik;
- Figur 7: ein drittes Ausführungsbeispiel einer Bildwiederholungsratenerhöhung gemäß der vorliegenden Erfindung;
- Figur 8: ein viertes Ausführungsbeispiel einer Bildwiederholungsratenerhöhung gemäß der Erfindung;
- Figur 9: ein Flussdiagramm gemäß einem Ausführungsbeispiel des erfindungsgemäßen Verfahrens; und
- Figur 10: ein Flussdiagramm zur Verdeutlichung der Berechnung eines neuen Bilds gemäß der Erfindung.

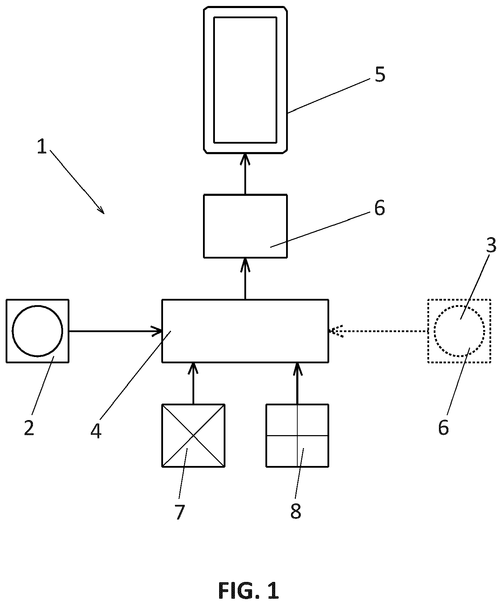

Figur 1 zeigt ein schematisches Blockdiagramm eines indirekten Sichtsystems für ein Fahrzeug gemäß einem bevorzugten Ausführungsbeispiel der Erfindung.

Das indirekte Sichtsystem 1 hat zwei Bildaufnahmevorrichtungen 2, die jeweils einen Bildsensor 3 aufweisen zum fortlaufenden Aufnehmen von Bildern mit einer ersten Bildwiederholungsrate, die der Bildwiederholungsrate des jeweiligen Bildsensors entspricht. Nur eine oder aber auch mehrere Bildausgabevorrichtung können vorhanden sein. Nachfolgend wird nur die links in der Figur gezeigte Bildausgabevorrichtung 2 beschrieben. In dem bevorzugten Ausführungsbeispiel ist die Bildwiederholungsrate des Bildsensors 3 beispielsweise gleich 45 frames per second (fps) oder 50 fps.

Wie in Figur 1 gezeigt ist die Bildaufnahmevorrichtung 2 mit einem Bildspeicher 4 verbunden, der die von den Bildaufnahmevorrichtungen 2 aufgenommenen Bilder zwischenspeichert. Die von den Bildaufnahmevorrichtungen 2 aufgenommenen Bilder sind fortlaufend aufgenommene Bilder, die einem Fahrer des Fahrzeugs nahezu in Echtzeit auf einer Bildausgabevorrichtung 5 angezeigt werden. Die von der Bildaufnahmevorrichtung 2 aufgenommenen Bilder können auch dauerhaft in dem Bildspeicher 4 gespeichert bleiben für eine spätere Verwendung bei einer Unfallanalyse, bei der Aufklärung von Sachbeschädigungen, etc.

Das Sichtsystem 1 weist ferner eine Bildverarbeitungsvorrichtung 6 auf, die mit dem Bildspeicher 4 verbunden ist und die in dem Bildspeicher 4 gespeicherten aufgenommenen Bilder verwendet für eine fortlaufende Berechnung von mindestens einem neuen Bild aus mindestens zwei aufeinanderfolgend aufgenommenen in dem Bildspeicher 4 gespeicherten Bildern. Die Bildverarbeitungsvorrichtung 6 ist in Figur 1 als separate Komponente dargestellt, kann jedoch auch in dem Bildspeicher 4 integriert sein, bzw. kann der Bildspeicher 4 in der Bildverarbeitungsvorrichtung 6 integriert sein.

Wie in Figur 1 gezeigt ist die Bildverarbeitungsvorrichtung 6 ferner mit der Bildausgabevorrichtung 5 verbunden, um die in der Bildverarbeitungsvorrichtung 6 neu berechneten Bilder auf der Bildausgabevorrichtung 5 anzuzeigen, und zwar mit einer höheren Bildwiederholungsrate als der Bildsensor 3 der Bildaufnahmevorrichtung 2 aufnehmen kann. Der in der Bildverarbeitungsvorrichtung 6 durchgeführte Berechnungsvorgang zur Berechnung eines neuen Bilds aus mindestens zwei aufeinanderfolgend aufgenommenen Bildern wird später genauer beschrieben.

Figur 1 zeigt ferner einen ersten Sensor 7 und einen zweiten Sensor 8, die jeweils mit dem Bildspeicher 4 verbunden sind. Der erste Sensor 7 und der zweite Sensor 8 können alternativ auch mit der Bildverarbeitungsvorrichtung 6 und/oder der Bildaufnahmevorrichtung 2 verbunden sein. Der erste Sensor 7 erfasst beispielsweise Fahrzeugzustände, wie Geschwindigkeit, Vor- und Rückwärtsfahrt, Stillstand, Parkvorgang, Rangiervorgang, Abbiegevorgang, etc., und der zweite Sensor 8 erfasst beispielsweise Fahrzeugsignale, wie Blinker, Rückwärtsgang, Helligkeitssensor, Beschleunigungssensor. Der erste und der zweite Sensor 7, 8 können auch zusätzlich oder alternativ eine manuelle Eingabe von einem Fahrer erfassen bzw. eine über den Bildsensor 3 der Bildaufnahmevorrichtung 2 erfasste Helligkeit, um die Bildwiederholungsrate der Bildaufnahmevorrichtung 2 in Abhängigkeit von den von dem ersten und zweiten Sensor 7, 8 erfassten Signalen dynamisch anzupassen. Beispielsweise kann durch Reduzieren der Bildwiederholungsrate des Bildsensors 3 bei dunkler Umgebung die Belichtungszeit des Bildsensors 3 verlängert und dadurch eine höhere Empfindlichkeit und somit eine bessere Sicht bei dunkler Umgebung erreicht werden.

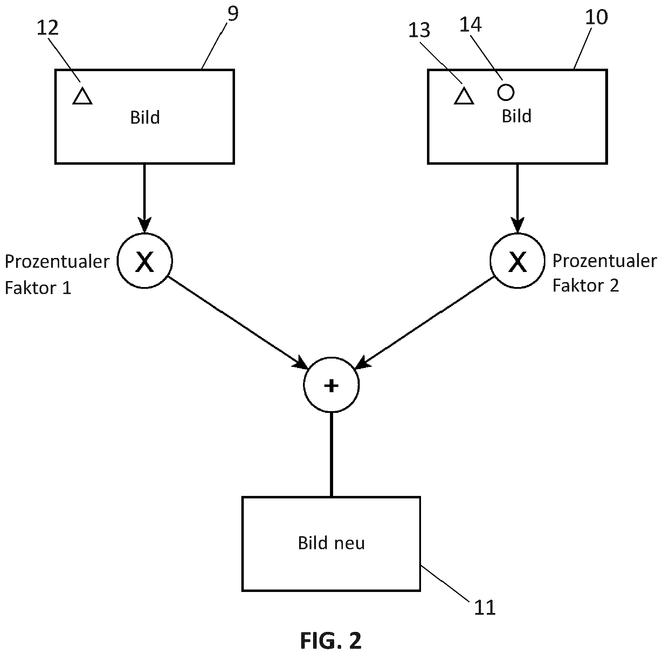

Figur 2 zeigt eine schematische Darstellung zur Verdeutlichung der Berechnung eines neuen Bilds gemäß der Erfindung.

Die in Figur 2 gezeigten Bilder 9, 10 werden von der in Figur 1 gezeigten mindestens einen Bildaufnahmevorrichtung 2 aufgenommen und in dem Bildspeicher 4 als nachfolgend aufgenommene Bilder gespeichert. Die Bildverarbeitungsvorrichtung 6 von Figur 1 übernimmt diese in dem Bildspeicher 4 gespeicherten Bilder 9, 10 und multipliziert das Bild 9 mit einem prozentualen Faktor 1. Ferner multipliziert die Bildverarbeitungsvorrichtung 6 das Bild 10 mit einem prozentualen Faktor 2. Das Berechnen bzw. Bestimmen der prozentualen Faktoren wird später genauer beschrieben.

Speziell wird Helligkeitsinformation und/oder Farbinformation jedes Pixels in dem Bild 9 mit dem entsprechenden prozentualen Faktor 1 multipliziert, und jedes Pixel in dem Bild 10 wird mit dem prozentualen Faktor 2 multipliziert. In Abhängigkeit von der Bildwiederholungsrate der Bildaufnahmevorrichtung 2 und der Bildausgabevorrichtung 5 können die prozentualen Faktoren 1, 2 voneinander abweichen. Beispielsweise ergibt die Summe aus prozentualer Faktor 1 und prozentualer Faktor 2 gleich 100 % bzw. 1, wie später genauer beschrieben.

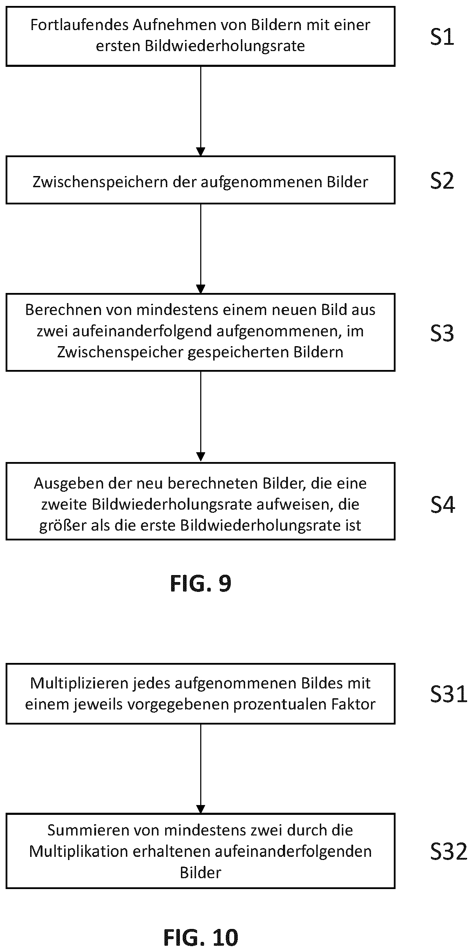

Wie in Figur 2 gezeigt werden die Bilder 9, 10 nach der Multiplikation jedes Pixels mit einem entsprechenden prozentualen Faktor summiert, um ein neues Bild 11 zu erzeugen. Speziell werden das Pixel 12 in Bild 9, dessen Helligkeits- und/oder Farbinformation mit dem prozentualen Faktor 1 multipliziert worden ist, und das Pixel 13 in Bild 10, das mit dem prozentualen Faktor 2 multipliziert worden ist, summiert. Dabei werden insbesondere diejenigen Pixel in dem Bild 9 mit denen in Bild 10 addiert, die sich lokal an der gleichen Stelle befinden. Wie in Figur 2 gezeigt wird beispielsweise das Pixel 12 in Bild 9 mit dem Pixel 13 addiert, obwohl das Pixel 12 aufgrund einer Bewegung von Bildinhalten dem Pixel 14 in Figur 10 entsprechen würde. Obiger Vorgang wird für jedes einzelne Pixel in den Bildern 9 und 10 durchgeführt, um das neue Bild 11 zu berechnen, das auf der Bildausgabevorrichtung 5 angezeigt wird.

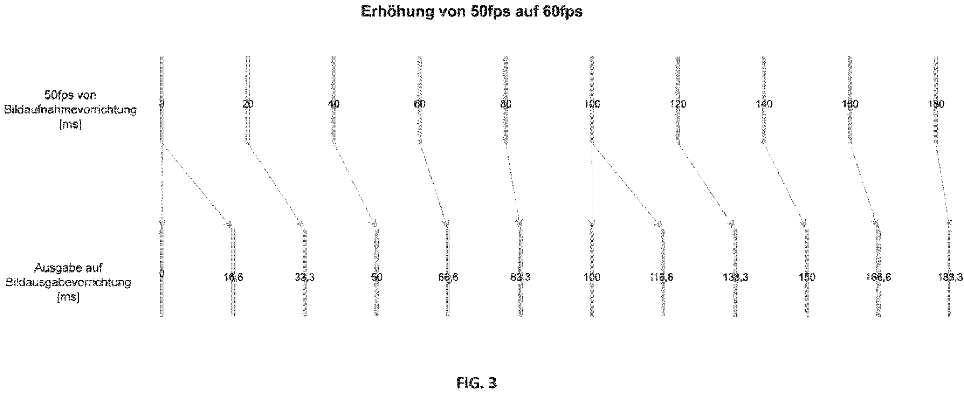

Figur 3 zeigt ein erstes Beispiel zur Erhöhung der Bildwiederholungsrate von 50 fps auf 60 fps gemäß dem Stand der Technik.

In der oberen Reihe in Figur 3 sind zehn von der Bildaufnahmevorrichtung 2 mit einer Bildwiederholungsrate von 50 fps aufgenommene Bilder bei 0, 20, ..., 180 ms gezeigt. Die untere Reihe in Figur 3 zeigt elf Bilder, die mit einer Bildwiederholungsrate von 60 fps ausgegeben werden. Um die Bildwiederholungsrate von 50 fps auf 60 fps gemäß dem Stand der Technik zu erhöhen, wird das bei 0 ms aufgenommene Bild zweimal hintereinander bei 0 ms und 16,6 ms wiedergegeben. Ebenso wird das von der Bildaufnahmevorrichtung bei 100 ms aufgenommene Bild zweimal hintereinander bei 100 ms und 116,6 ms wiedergegeben. Die bei 20 ms, 40 ms, 60 ms, 80 ms, 120 ms, 140 ms, 160 ms und 180 ms von der Bildaufnahmevorrichtung aufgenommenen Bilder werden jeweils einmal, aber zeitversetzt auf der Bildausgabevorrichtung ausgegeben, wie in Figur 3 gezeigt, um eine Bildwiederholungsrate von 60 fps zu erhalten.

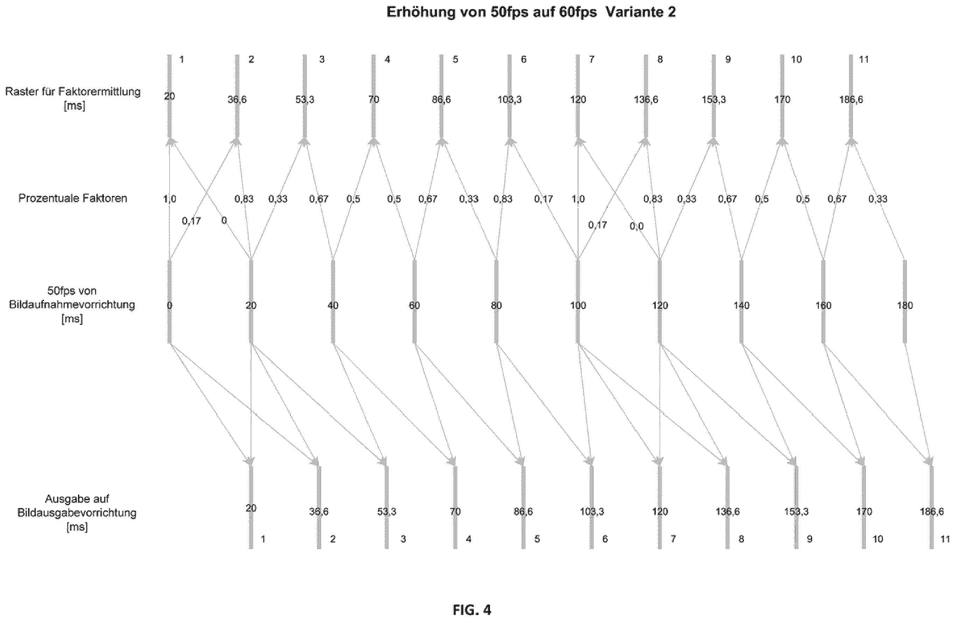

Im Gegensatz zur vorliegenden Erfindung werden in Figur 3 keine Bilder aus mindestens zwei aufeinanderfolgenden von der Bildaufnahmevorrichtung aufgenommenen Bilder neu berechnet, wie nachfolgend unter Bezugnahme auf Figur 4 beschrieben.

Figur 4 zeigt ein erstes Ausführungsbeispiel der Erfindung für eine Bildwiederholungsratenerhöhung von 50 fps auf 60 fps. Figur 4 zeigt in der mittleren Zeile, ähnlich wie in Figur 3, zehn von der Bildaufnahmevorrichtung mit einer Bildwiederholungsrate von 50 fps aufgenommene Bilder. Gemäß dem ersten Ausführungsbeispiel werden das Bild bei 0 ms und das Bild bei 20 ms gemäß dem in Figur 2 beschriebenen Vorgang zu einem neuen Bild 1 in der oberen Zeile in Figur 4 verrechnet, indem das bei 0 ms aufgenommene Bild mit dem prozentualen Faktor 1,0 multipliziert wird, das bei 20 ms aufgenommene Bild mit dem prozentualen Faktor 0,0 multipliziert wird, und die erhaltenen resultierenden Bilder zu dem neuen Bild 1 summiert werden. Aufgrund der prozentualen Faktoren von 0,0 und 1,0, ist das neu berechnete Bild 1 in diesem Fall mit dem bei 0 ms aufgenommenen Bild identisch.

Wie in Figur 4 gezeigt wird das neue Bild 1 bei 20 ms auf der Bildausgabevorrichtung 5 ausgegeben. Wie in Figur 4 ferner gezeigt werden die beiden bei 0 ms und 20 ms aufgenommenen Bilder ferner zu einem neuen Bild 2 verrechnet, wie in der oberen Zeile von Figur 4 zu sehen. Hierzu wird das bei 0 ms aufgenommene Bild mit dem prozentualen Faktor 0,17 multipliziert, und das bei 20 ms aufgenommene Bild wird mit dem prozentualen Faktor 0,83 multipliziert. Wie in Figur 2 beschrieben, werden die resultierenden Bilder zu dem neuen Bild 2 summiert. Das neu berechnete Bild 2 wird bei 36,6 ms ausgegeben. In ähnlicher Weise wird aus dem Bild, das bei 20 ms von der Bildaufnahmevorrichtung aufgenommen wird, und dem nachfolgenden Bild, das bei 40 ms aufgenommen wird, das Bild 3 berechnet, wie in Figur 4 in der obigen Zeile gezeigt, indem das bei bei 20 ms aufgenommene Bild mit dem prozentualen Faktor 0,33 multipliziert wird, das bei 40 ms aufgenommene Bild mit dem prozentualen Faktor 0,67 multipliziert wird, und die resultierenden Bilder zu dem neuen Bild 3 summiert werden.

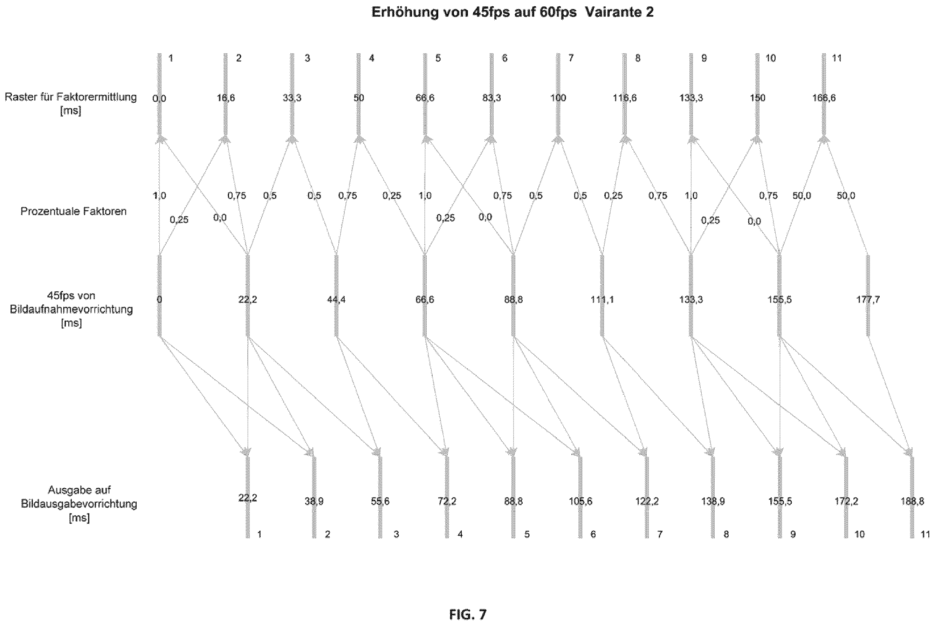

Die obere Zeile in Figur 4 entspricht einem Raster zur Ermittlung der prozentualen Faktoren, um eine Bildwiederholungsrate von 50 fps auf 60 fps umzurechnen. Das Raster ist wie oben beschrieben beispielsweise in einem Speicher vorab festgelegt oder wird zur Laufzeit berechnet. Das Raster ändert sich in Abhängigkeit von der Bildwiederholungsrate der Bildaufnahmevorrichtung und der Bildwiederholungsrate der Bildausgabevorrichtung, wie später unter Bezugnahme auf Figur 7 deutlich wird.

Die in Figur 4 gezeigten prozentualen Faktoren entsprechen der zeitlichen Lage des neu berechneten Bilds in Bezug auf die zeitliche Lage der mindestens zwei aufeinanderfolgend aufgenommenen Bilder. D.h. die prozentualen Faktoren entsprechen einer Art Gewichtung der aufgenommenen Bilder, die an Hand zeitlicher Kriterien erfolgt, also an Hand dessen, in welchen zeitlichen Verhältnis bzw. Abstand der Zeitpunkt des auszugebenden Bilds zum Zeitpunkt des aufgenommen Bilds steht. Beispielsweise liegt das neu erzeugte Bild 2 in der oberen Zeile von Figur 4 bei 36,6 ms, also zwischen dem bei 20 ms aufgenommenen Bild und dem bei 40 ms aufgenommenen Bild in der mittleren Zeile von Figur 4. Dementsprechend errechnet sich der prozentuale Faktor, mit dem das bei 20 ms aufgenommene Bild multipliziert wird, durch den zeitlichen Abstand (36,6 ms-20 ms) geteilt durch den zeitlicher Abstand von zwei aufeinanderfolgenden Bilder bei 50fps (20 ms). Der prozentuale Faktor, mit dem das bei 0 ms aufgenommene Bild multipliziert wird, um das neue Bild 2 zu erzeugen, berechnet sich aus dem zeitlichen Abstand zwischen dem bei 40 ms aufgenommenen Bild und dem neu erzeugten Bild 2 (40 ms ― 36,6 ms) geteilt durch den zeitlicher Abstand von zwei aufeinanderfolgenden Bilder bei 50fps (20 ms).

Wie in Figur 4 gezeigt werden in gleicher Weise, wie oben beschrieben, die prozentualen Faktoren anhand des Rasters für die verbleibenden aufgenommenen Bilder bestimmt und verwendet, um die neuen Bilder 3 bis 11 zu erzeugen.

Wie in Figur 4 gezeigt, wird das neu erzeugte Bild 1 bei 20 ms ausgegeben und aus den bei 0 ms und 20 ms aufgenommenen Bildern mit den prozentualen Faktoren 1 und 0, wie oben beschrieben berechnet. Das neu erzeugte Bild 2 wird bei 36,6 ms ausgegeben und aus den bei 0 ms und 20 ms aufgenommenen Bildern mit den prozentualen Faktoren 0,17 und 0,83 erzeugt. Das neu erzeugte Bild 3 wird bei 53,3 ms ausgegeben und aus den bei 20 ms und 40 ms aufgenommenen Bildern mit den prozentualen Faktoren 0,33 und 0,67 erzeugt. In ähnlicher Weise werden die neu erzeugten Bilder 4 bis 11 erzeugt auf der Bildausgabevorrichtung mit einer Bildwiederholungsrate von 60 fps ausgegeben.

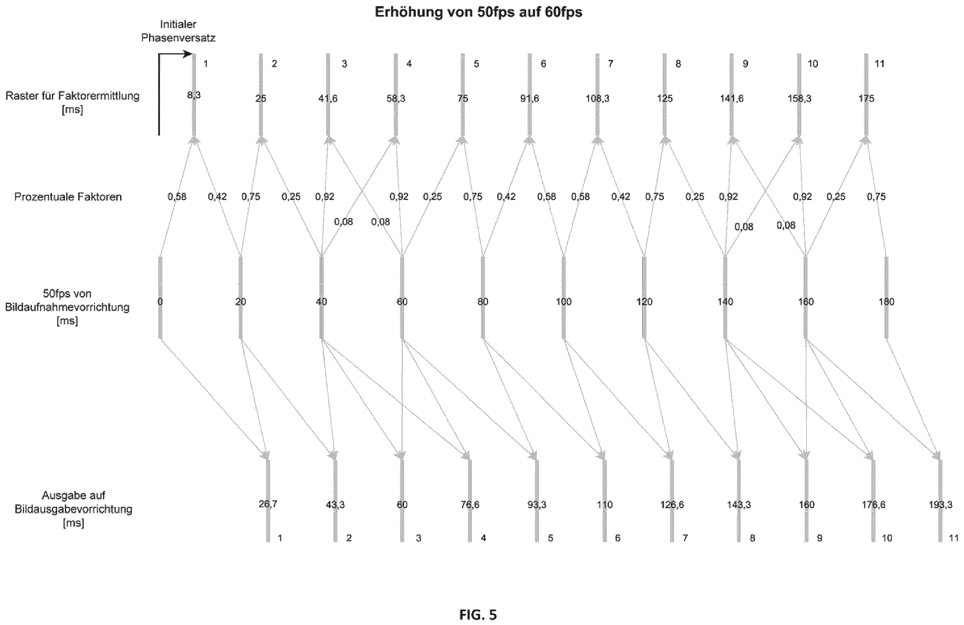

Figur 5 zeigt ein zweites Ausführungsbeispiel für eine Bildwiederholungsratenerhöhung von 50 fps auf 60 fps.

Das zweite Ausführungsbeispiel unterscheidet sich von dem ersten Ausführungsbeispiel dadurch, dass zusätzlich das Raster für die Faktorermittlung einen initialen Phasenversatz aufweist, wie in Figur 5 gezeigt. Ein initialer Phasenversatz bedeutet, dass das in Figur 4 gezeigte Raster zeitlich verschoben ist. Gemäß dem in Figur 5 gezeigten zweiten Ausführungsbeispiel ist das Raster von Figur 4 derart nach rechts verschoben, dass das erste neu erzeugte Bild bei 8,3 ms erzeugt wird. Die zeitliche Lage von 8,3 ms in Bezug auf die zeitliche Lage der bei 0 ms und 20 ms aufgenommenen Bilder hat die prozentualen Faktoren 0,58 und 0,42 zur Folge, die wie oben beschrieben berechnet werden. Ähnlich wie in Figur 4 ergibt die Summe der prozentualen Faktoren zur Berechnung des neuen Bilds 1 gleich 100 %. Das zweite Ausführungsbeispiel mit dem initialen Phasenversatz hat den Vorteil, dass möglichst wenig neu berechnete Bilder mit den aufgenommenen Bildern übereinstimmen. Erneut bezugnehmend auf Figur 4 sind beispielsweise die neu berechneten Bilder 1 und 7, die zu den Zeitpunkten 20 ms und 120 ms ausgegeben werden, identisch mit den bei 20 ms und 100 ms aufgenommenen Bildern. Wie in Figur 5 gezeigt, ist aufgrund des Phasenversatzes keines der neu erzeugten Bilder 1 bis 11 identisch mit einem der aufgenommenen Bilder.

Wie in Figur 5 gezeigt ist das ausgegebene neue Bild 1 aus den bei 0 ms und 20 ms aufgenommenen Bildern mit den prozentualen Faktoren 0,58 und 0.42 berechnet, das neu ausgegebene neue Bild 2 ist aus den bei 20 ms und 40 ms aufgenommenen Bildern mit den prozentualen Faktoren 0, 75 und 0,25 berechnet, das neu ausgegebene Bild 3 ist aus den bei 40 ms und 60 ms aufgenommenen Bildern mit den prozentualen Faktoren 0,92 und 0,08 berechnet, das neu ausgegebene Bild 4 ist aus den bei 40 ms und 60 ms aufgenommenen Bildern mit den prozentualen Faktoren 0,08 und 0,92 berechnet, das neue Bild 5 ist aus den bei 60 ms und 80 ms aufgenommenen Bildern mit den prozentualen Faktoren 0,25 und 0,75 berechnet, etc.

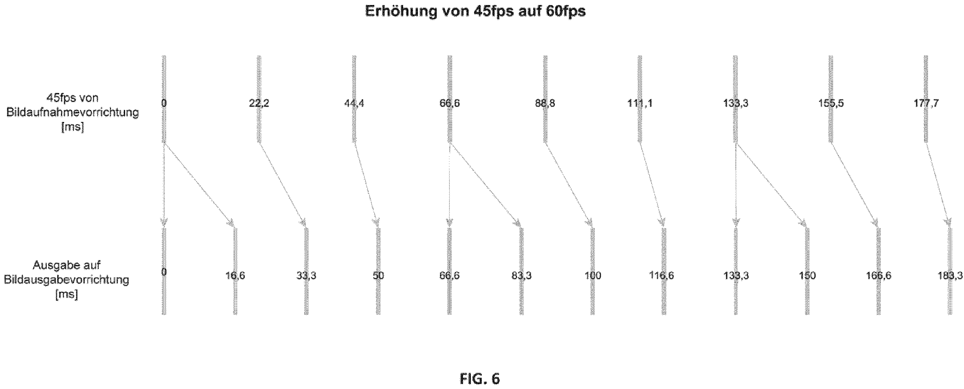

Figur 6 zeigt ein zweites Beispiel einer Bildwiederholungsratenerhöhung von 45 fps auf 60 fps gemäß dem Stand der Technik.

Figur 6 zeigt in der oberen Zeile neun Bilder, die von der Bildaufnahmevorrichtung mit 45 fps aufgenommen worden sind. Die unter Zeile in Figur 6 zeigt die Ausgabe auf der Bildausgabevorrichtung mit 60 fps. Eine Erhöhung von 45 fps auf 60 fps wird gemäß dem zweiten Beispiel des Standes der Technik dadurch erreicht, dass die bei 0 ms, 66,6 ms und 133,3 ms aufgenommenen Bilder zweimal hintereinander wiedergegeben werden. Das bei 0 ms aufgenommene Bild wird beispielsweise zweimal bei 0 ms und 16,6 ms wiedergegeben, das bei 66,6 ms aufgenommene Bild wird bei 66,6 ms und 83,3 ms wiedergegeben und das bei 133,3 ms aufgenommene Bild wird bei 133,3 ms und bei 150 ms wiedergegeben, um eine Bildwiederholungsratenerhöhung von 45 fps auf 60 fps zu erhalten.

Im Gegensatz dazu zeigt Figur 7 ein drittes Ausführungsbeispiel für eine Bildwiederholungsratenerhöhung von 45 fps auf 60 fps gemäß der Erfindung. Ähnlich wie bei dem ersten Ausführungsbeispiel von Figur 4 wird bei der Bildwiederholungsratenerhöhung von 45 fps auf 60 fps kein Phasenversatz verwendet. Wie in Figur 7 gezeigt unterscheidet sich das Raster in der obersten Zeile von Figur 7 von dem Raster zur Faktorermittlung in Figur 4 dadurch, dass die zeitlichen Abstände zwischen den neu erzeugten Bildern anders sind. Dies resultiert aus der Tatsache, dass gemäß dem dritten Ausführungsbeispiel eine Bildratenerhöhung von 45 fps auf 60 fps erfolgt, anstatt von 50 fps auf 60 fps.

Die Berechnung der prozentualen Faktoren, das Erzeugen der neuen Bilder unter Verwendung der prozentualen Faktoren, sowie die entsprechenden Ausgabe der neu erzeugten Bilder erfolgt in ähnlicher Weise wie oben für das erste Ausführungsbeispiel beschrieben und wird nicht wiederholt.

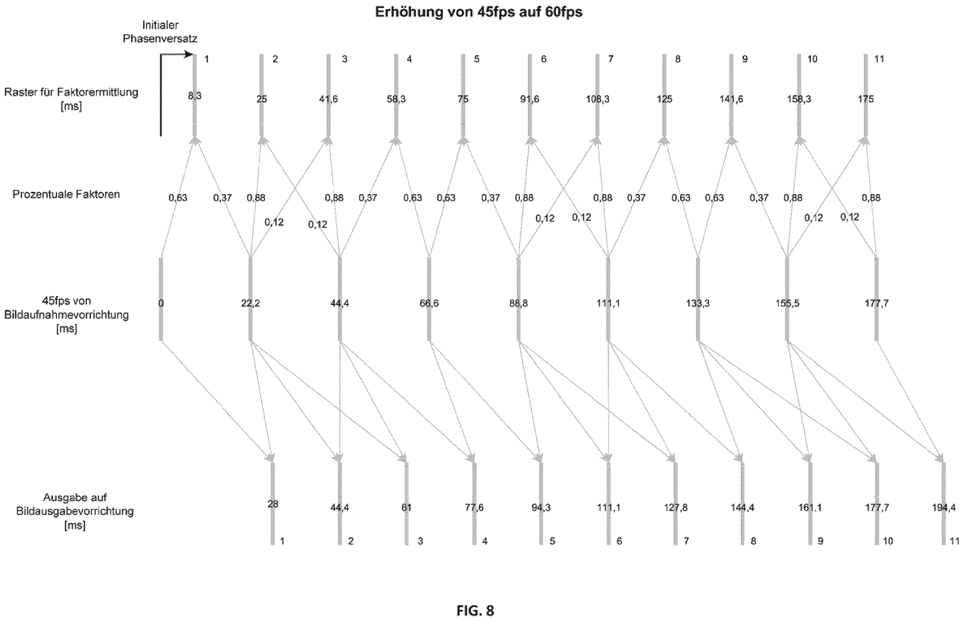

Figur 8 zeigt ein viertes Ausführungsbeispiel einer Bildwiederholungsratenerhöhung von 45 fps auf 60 fps gemäß der Erfindung. Das vierte Ausführungsbeispiel unterscheidet sich von dem dritten Ausführungsbeispiel dadurch, dass ähnlich wie in dem zweiten Ausführungsbeispiel ein initialer Phasenversatz verwendet wird.

Wie oben beschrieben und aus den Figuren 4, 5 und 7, 8 deutlich zu erkennen ist, ergibt die Summe der prozentualen Faktoren zur Berechnung eines neuen Bilds jeweils 100 % bzw. 1. Für den Fall, dass eine Bildaufhellung erwünscht ist, können die prozentualen Faktoren derart erhöht werden, dass die Summe größer als 100 % ist. Für den Fall einer Bildabdunkelung, kann die Summe kleiner als 100 % sein.

Figur 9 zeigt ein Flussdiagramm gemäß der Erfindung zum Anpassen einer Bildwiederholungsrate eines Bildsensors einer Bildaufnahmevorrichtung an die Bildwiederholungsrate einer Bildausgabevorrichtung.

In Schritt S1 werden fortlaufend Bilder mit einer ersten Bildwiederholungsrate (Bildwiederholungsrate des Bildsensors) aufgenommen. In Schritt S2 werden die aufgenommenen Bilder in einem Zwischenspeicher gespeichert. In Schritt S3 wird mindestens ein neues Bild aus zwei aufeinanderfolgend aufgenommenen und im Zwischenspeicher gespeicherten Bildern berechnet. Der Schritt S3 wird genauer unter Bezugnahme auf Figur 10 beschrieben. In Schritt S4 wird jedes neu berechnete Bild mit einer Bildwiederholungsrate ausgegeben, die der Bildwiederholungsrate der Bildausgabevorrichtung angepasst ist.

Figur 10 zeigt ein Flussdiagramm, das den in Figur 9 gezeigten Schritt S3 näher verdeutlicht.

In S31 wird zur Erzeugung eines neuen Bilds jedes aufgenommene Bild mit einem jeweils vorgegebenen prozentualen Faktor multipliziert, der wie oben beschrieben ermittelt wird. In Schritt S32 erfolgt ein Summieren von mindestens zwei durch die Multiplikation erhaltenen aufeinanderfolgenden Bildern. Diesbezüglich wird auch auf die obige Beschreibung der Figur 2 verwiesen.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

### BEZUGSZEICHENLISTE:

- 1: Sichtsystem
- 2: Bildaufnahmevorrichtung
- 3: Bildsensor
- 4: Bildspeicher
- 5: Bildausgabevorrichtung
- 6: Bildverarbeitungsvorrichtung
- 7: erster Sensor
- 8: zweiter Sensor
- 9: Bild
- 10: Bild
- 11: neues Bild
- 12: Pixel Bild 9
- 13: Pixel Bild 10
- 14: Pixel in Bild 10

## Patentansprüche

1. Indirektes Sichtsystem für ein Fahrzeug, mit:
mindestens einer Bildaufnahmevorrichtung (2) mit einem Bildsensor zum fortlaufenden Aufnehmen von Bildern mit einer ersten Bildwiederholungsrate;
einem Bildspeicher (4), der Bilder für eine Verarbeitung, die zeitlich nach der Aufnahme der Bilder liegt, zwischenspeichert;
einer Bildverarbeitungsvorrichtung (6), die angepasst ist zum fortlaufenden Berechnen von mindestens einem neuen Bild aus mindestens zwei aufeinanderfolgend aufgenommenen Bildern, wobei die neu berechneten Bilder eine zweite Bildwiederholungsrate aufweisen, die von der ersten Bildwiederholungsrate verschieden ist; und
einer Bildausgabevorrichtung (5) zum Ausgeben der fortlaufend neu berechneten Bilder mit der zweiten Bildwiederholungsrate.

2. System nach Anspruch 1, bei dem das mindestens eine neu berechnete Bild durch Summenbildung aus mindestens zwei aufeinanderfolgenden, jeweils mit einem prozentualen Faktor multiplizierten, Bildern gebildet ist, wobei der prozentuale Faktor der zeitlichen Lage des neu berechneten Bilds in Bezug auf die zeitliche Lage der mindestens zwei aufeinanderfolgend aufgenommenen Bildern entspricht.

3. System nach Anspruch 2, bei dem Helligkeitsinformation und Farbinformation jedes Pixels in einem aufgenommenen Bild getrennt oder kombiniert mit dem entsprechenden prozentualen Faktor multipliziert werden, und jeweils entsprechende Pixel in den mindestens zwei aufeinanderfolgend aufgenommenen Bildern summiert werden zur Erzeugung des neuen Bilds, oder
bei dem Helligkeitsinformation und Farbinformation der Rohdaten des Bildsensors getrennt oder kombiniert mit dem entsprechenden prozentualen Faktor multipliziert und in den mindestens zwei aufeinanderfolgend aufgenommenen Bilder summiert werden zur Erzeugung des neuen Bilds.

4. System nach einem der Ansprüche 1 bis 3, bei dem die prozentualen Faktoren von der Bildwiederholungsrate der Bildaufnahmevorrichtung und der Bildwiederholungsrate der Bildausgabevorrichtung abhängen.

5. System nach Anspruch 4, bei dem die prozentualen Faktoren zusätzlich von einen Anfangs-Phasenversatz zwischen der ersten und zweiten Bildwiederholungsrate abhängen.

6. System nach einem der Ansprüche 1 bis 5, bei dem die prozentualen Faktoren als Konstanten in der Bildverarbeitungsvorrichtung (6) gespeichert sind oder von der Bildverarbeitungsvorrichtung (6) zur Laufzeit berechnet werde, und/oder
bei dem die Summe der prozentualen Faktoren 100 % ist, und/oder
bei dem die Bildwiederholungsrate der Bildaufnahmevorrichtung (2) und die Bildwiederholungsrate der Bildausgabevorrichtung (5) statisch sind und sich während des Betriebs des Systems nicht ändern, oder sich die Bildwiederholungsrate der Bildaufnahmevorrichtung (2) in Abhängigkeit von Fahrzeugzuständen, Fahrzeugsignalen, einer manuellen Eingabe durch einen Benutzer, und/oder Signalen eines Helligkeitssensors der Bildaufnahmevorrichtung und/oder Signalen eines Helligkeitssensors der Bildausgabevorrichtung (5) dynamisch ändert, und/oder bei dem die Bildverarbeitungsvorrichtung (6) in der Bildaufnahmevorrichtung (2) oder Bildausgabevorrichtung (5) integriert und/ oder der Bildspeicher in der Bildverarbeitungsvorrichtung (6) integriert ist.

7. Verfahren zum Erhöhen einer Bildwiederholungsrate, mit den Schritten:
fortlaufendes Aufnehmen von Bildern mit der Bildwiederholungsrate des Bildsensors (3) der Bildaufnahmevorrichtung (2);
Zwischenspeichern der aufgenommenen Bilder für eine zeitlich nach der Aufnahme der Bilder liegende Verarbeitung;
fortlaufendes Berechnen von mindestens einem neuen Bild aus mindestens zwei aufeinanderfolgend aufgenommenen Bildern, wobei die neu berechneten Bilder die Bildwiederholungsrate der Bildausgabevorrichtung (5) haben; und
Ausgeben der fortlaufend neu berechneten Bilder mit der Bildwiderholungsrate der Bildausgabevorrichtung (5).

8. Verfahren nach Anspruch 7, bei dem das Berechnen des mindestens einen neuen Bilds ein Bilden einer Summe aus mindestens zwei aufeinanderfolgenden, jeweils mit einem prozentualen Faktor multiplizierten, Bildern aufweist, wobei der prozentuale Faktor der zeitlichen Lage des neu berechneten Bilds in Bezug auf die zeitliche Lage der mindestens zwei aufeinanderfolgend aufgenommenen Bildern entspricht.

9. Verfahren nach Anspruch 8, ferner mit:
einem Multiplizieren einer Helligkeitsinformation und Farbinformation jedes Pixels in einem aufgenommenen Bild getrennt oder kombiniert mit dem entsprechenden prozentualen Faktor, und dann einem Summieren jeweils entsprechender Pixel in den mindestens zwei aufeinanderfolgend aufgenommenen Bildern zur Erzeugung des neuen Bilds, oder mit:
einem Multiplizieren einer Helligkeitsinformation und Farbinformation der Rohdaten des Bildsensors (3) getrennt oder kombiniert mit dem entsprechenden prozentualen Faktor, und dann einem Summieren der jeweils entsprechenden Resultate in den mindestens zwei aufeinanderfolgend aufgenommenen Bilder zur Erzeugung des neuen Bilds.

10. Verfahren nach einem der Ansprüche 7 bis 9, bei dem die prozentualen Faktoren von der Bildwiederholungsrate der Bildaufnahmevorrichtung (2) und der Bildwiederholungsrate der Bildausgabevorrichtung (5) abhängen.

11. Verfahren nach Anspruch 10, bei dem die prozentualen Faktoren zusätzlich von einen Anfangs-Phasenversatz zwischen der ersten und zweiten Bildwiederholungsrate abhängen.

12. Verfahren nach einem der Ansprüche 7 bis 11, ferner mit:
Speichern der prozentualen Faktoren als Konstanten in der Bildverarbeitungsvorrichtung (6), oder
Berechnen der prozentualen Faktoren zur Laufzeit durch die Bildverarbeitungsvorrichtung (6).

13. Verfahren nach einem der Ansprüche 7 bis 12, bei dem die Summe der prozentualen Faktoren 100 % ist.

14. Verfahren nach einem der Ansprüche 7 bis 13, bei dem die Bildwiederholungsrate der Bildaufnahmevorrichtung (2) und die Bildwiederholungsrate der Bildausgabevorrichtung (5) statisch sind und sich während des Betriebs des Systems nicht ändern, oder sich die Bildwiederholungsrate der Bildaufnahmevorrichtung (2) in Abhängigkeit von Fahrzeugzuständen, Fahrzeugsignalen, einer manuellen Eingabe durch einen Benutzer, und/oder Signalen eines Helligkeitssensors der Bildaufnahmevorrichtung und/oder Signalen eines Helligkeitssensors der Bildausgabevorrichtung (5) dynamisch ändert.

15. Verfahren nach einem der Ansprüche 7 bis 14, bei dem die Bildverarbeitungsvorrichtung (6) in der Bildaufnahmevorrichtung (2) oder Bildausgabevorrichtung (5) integriert ist, und/ oder der Bildspeicher in der Bildverarbeitungsvorrichtung (6) integriert ist.
